# FASCICULE DE BREVET EUROPEEN

(11) **EP 1 031 112 B1**
(45) Date de publication et mention de la délivrance du brevet: **18.09.2002**
(21) Numéro de dépôt: 98950175.4
(22) Date de dépôt: 22.10.1998
(51) Int. Cl.: G06K 17/00, A22B 5/00

(54) **PROCEDE POUR ASSURER LA TRACABILITE D'ELEMENTS D'UNE SERIE DE TRANSFORMATIONS ET APPLICATIONS DE CE PROCEDE**
VERFAHREN ZUM SICHERSTELLEN DER VERFOLGUNG VON AUFEINANDERFOLGENDEN ELEMENTEN EINER UMWANDLUNGSREIHE UND ANWENDUNGEN DIESES VERFAHRENS
METHOD FOR ENSURING THE TRACEABILITY OF SUCCESSIVE ELEMENTS OF A SERIES OF TRANSFORMATIONS AND APPLICATIONS THEREOF

(30) Priorité: 19.11.1997 FR 9714514
(43) Date de publication de la demande: 30.08.2000
(73) Titulaire: ECO-SYS INTERNATIONAL S.A., 75015 Paris (FR)
(72) Inventeur: Rivaillier, Jacques, 78114 Magny les Hameaux (FR); Salomon, Georges, 60260 Lamorlaye (FR)
(74) Mandataire: Breese, Pierre
(86) Numéro de dépôt international: FR9802258
(87) Numéro de publication internationale: WO99026194

(56) Documents cités:
- WO-A-95/10812
- WO-A-97/05577
- GB-A- 2 291 522

## Description

La présente invention concerne le domaine de la sécurité dans des opérations de transformations.

De nombreuses activités comporte une multitudes d'opérations de transformations d'un produit initial en éléments intermédiaires successifs, puis en éléments finaux. Le problème que l'invention vise à résoudre est celui de la traçabilité des opérations de transformations, et plus particulièrement de permettre de garantir l'origine des éléments finaux.

Un exemple d'application est celui de la filière viande. Les règlementations agro-alimentaires imposent de pouvoir certifier l'origine de la vande vendue au détail. Il convient donc, tout au long de la chaîne de transformation reliant l'éleveur au consommateur final, d'assurer un suivi des éléments intermédiaires (animaux sur pied, caracasses, caisses de viande du grossiste, caissettes et barquettes de vente au détail), et bien sur d'éviter toute fraude consistant à introduire dans la chaîne de transformation des éléments intermédiaire dont l'origine est différente de celle garantie au consommateur final.

Le document WO-A- 95/10812 décrit un procédé pour assurer la traçabilité de quartiers de viande tout au long de la chaine de traitement après l'abattage d'un aminal de boucherie. Dans ce precédé on associe à chaque animal abattu un code et une clé d'identification (Q-PIN, Q-TN). Les deux éléments servent à générer des codes d'identification (P-TN) qui seront apposés sur une des étiquettes pour assurer le suivi des quartiers de viande aprés découpage de l'aminal.

L'invention concerne un procédé pour assurer la traçabilité d'éléments successifs d'une série de transformations, comportant à chaque transmission une étape consistant établir un document d'identification de l'élément résultant de ladite transformation, caractérisé en ce que l'on associe à chaque élément un code d'identification et une clé de scellement calculés respectivement à partir, du code d'identification et de la clé de scellement associés à l'élément avant sa transformation d'une part et du document d'identification dudit élément d'autre part.

Avantageusement, les clés sont susceptibles d'une représentation graphique.

Selon une première variante, la clé de scellement est calculée entre outre à partir d'informations relatives au lieu de la transformation.

Selon une deuxième variante, la clé de scellement est calculée entre outre à partir d'informations relatives à la date de la transformation.

Selon une troisière variante, la clé de scellement est calculée entre outre à partir d'informations relatives à l'opérateur de la transformation.

Selon un mode de réalisation particulier, la clé de scellement est apposée sous forme d'un marquage matriciel.

L'invention concerne par ailleurs l'application du procédé pour la traçabilité de la chaîne de transformation de la viande.

L'invention concerne également l'application du procédé pour la traçabilité du retraitement de déchets.

Une autre application du procédé conforme à l'invention est la traçabilité d'échantillons biologiques.

L'invention sera mieux comprise à la lecture de la description qui suit, se référant à un exemple non limitatif de réalisation.

Cet exemple concerne le suivi de la chaîne de transformation de la viande.

On établit pour chaque animal un document d'identification D₀ dit DAB comportant le code d'identification I0 et diverses informations constituant l'état civil de l'animal, telles que le lieu d'élevage, la date de naissance, la race, les références de l'éleveur. A partir d'une partie ou de la totalité de ces informations, on calcule une clé C0. L'animal sur pied est marqué par une BOUCLE (anneau) fixée sur l'oreille de façon indétachable ou par tatouage. Cette marque comporte un code d'identification I₀ numérique ou alphanumérique permettant d'identifier de façon univoque l'animal sur pied et la clé C0. Cette clé sert à coder et/ou à sceller les informations du DAB. Par contre, le code d'identification permet d'établir une relation univoque simple entre l'animal sur pied et son document d'identification. Ce code peut servir à déclencher la suite du processus s'il y a concordance entre le code d'identification de la boucle et du DAB D0. Toutefois la sécurité est fortement renforcée si la décision de poursuite des opérations est validée qu'après déscellement et/ou déchiffrement des informations du DAB D0 au moyen de la clé "de scellement" C0 provenant la bonne bague. Pour poursuivre les opérations il est nécessaire d'élaborer une nouvelle clé: C1.

A l'abattoir, on procède à une première étape de transformation de l'animal sur pied en carcasse. Il convient de garantir l'origine de chaque caracasse. Pour cela, chaque caracasse est marquée avec un code de scellement C₁, servant de clé pour exploiter le document d'accompagnement D1, apposé par tatouage ou par gravage sur un os, ou par tout autre moyen adéquat permettant de lier ce code avec la caracasse.Pour faciliter la gestion au niveau de l'abattoir, un code d'identification I1 peut être marqué à côté de C1. Le code d'identification I1 sera seul reporté sur D1. Le code clé C1 servira à sceller et éventuellement chiffrer les informations de D1.

Ce code C₁ peut être une variable quelconque (ex: heure) ou une variable aléatoire, mais il gagne à être calculé par un algorithme de cryptage à partir de tout ou partie
- des informations figurant sur le document d'identification de l'animal sur pied d'une part ;
- du code d'identification I0 marquant l'animal sur pied ;
- le code clé C0;
- des informations sur le lieu et la date de l'abattage, ainsi que sur l'opérateur et la salle de traitement, si elle sont connues au moment de l'élabaration de C1.

De même le code d'identification I1 peut être élaboré à partir des principales informations caractèrisant les origines du produit dont I0 et ses principales transformations à chaque stade, en utilisant, par exemple, un algorithme de compression.

Dans le cas du code clé, il est quasi impossible de remonter vers l'origine, au contaire les codes d'identification doivent assurer le retour vers les informations d'amont.

Ces codes sont représentés sous forme graphique, par exemple par des caractères alphanumériques, ou par des matrices graphiques de type code-barres ou de codes ECO à NxM cases.

A titre d'exemple, l'algorithme de calcul de la clé de scellement et/ou chiffrement peut être un algorithme de cryptage à clé publique et clé privée de type DES ou RSA.

La carcasse est accompagnée d'un document d'identification D1 comportant le code d'identification I₁ ainsi que tout ou partie des informations figurant sur le DAB - document d'identification D₀ de l'animal sur pied -, et en particulier du code I₀ marquant l'animal sur pied.

Les codes I1 et C₁ permettent à tout moment de vérifier l'origine de la carcasse, et plus précisément la conformité de la carcasse et du document d'identification qui est fournit avec la carcasse. En cas de fraude, le code d'identification de la carcasse diffèrera de celui résultant du calcul réalisé par le contrôleur à partir des informations figurant sur le document d'identification de la carcasse.

Par ailleurs, l'algorithme de scellement interdit le calcul d'un code de scellement à partir d'informations falsifiées, si on n'enpossède pas la clé privée ou le code secret équivalent permettant de procéder au calcul d'un code.

Cette opération de calcul d'un nouveau code intermédiaire et d'établissement d'un document d'identification des éléments intermédiaires peut être répétée à chaque étape de la transformation.

Par exemple, au moment de la découpe de la carcasse, chaque morceau, ou la barquette les contenants, peut être marqué par un code de scellement C₂ et accompagné par un certification d'origine D₂.

Les codes I2 et C₂ sont calculés en fonction des codes I1 et C₁ et des informations figurant sur le document d'identification D₁ accompagnant la carcasse découpée au cours de cette nouvelle étape de transformation.

Les calculs des code I2 et C₂ peuvent prendre en compte en outre des informations telles que la date de la découpe, l'opérateur chargé de cette opération, le lieu de la découpe, etc.

Cette opération de calcul des codes Ii et Cᵢ puis l'établissement de certificats Dᵢ peut être répétée jusqu'à l'étape finale au cours de laquelle une étiquette d'identification est apposée sur le produit offert à la vente au consommateur final.

## Revendications

1. Procédé pour assurer la traçabilité d'éléments successifs d'une série de transformations, comportant à chaque transmission une étape consistant à établir un document d'identification de l'élément résultant de ladite transformation et éventuellement des précédentes, **caractérisé en ce que** l'on associe à chaque élément une clé de scellement et un code d'identification calculés à partir, respectivement, de la clé de scellement et du code d'identification associés à l'élément avant sa transformation d'une part et du document d'identification dudit élément d'autre part.

2. Procédé pour assurer la traçabilité selon la revendication 1, **caractérisé en ce que** les clés successives sont calculées de manière irréversible, aval vers amont.

3. Procédé pour assurer la traçabilité selon la revendication 1 ou 2, **caractérisé en ce que** les codes d'identification successifs sont établis pour faciliter la quête d'information de l'aval vers l'amont et pour supporter du début à la fin des opérations, un minimum de détails sur l'origine du produit.

4. Procédé pour assurer la traçabilité selon l'une quelconque des revendications précédentes **caractérisé en ce que** les clés et les codes d'identification sont susceptibles d'une représentation graphique.

5. Procédé pour assurer la traçabilité selon l'une quelconque des revendications précédentes **caractérisé en ce que** la clé de scellement et/ou le code d'identification sont calculés entre autre à partir d'informations relatives au lieu de la transformation.

6. Procédé pour assurer la traçabilité selon l'une quelconque des revendication précédentes **caractérisé en ce que** la clé de scellement et/ou le code d'identification sont calculés entre autre à partir d'informations relatives à la date de la transformation.

7. Procédé pour assurer la traçabilité selon l'une quelconque des revendication précédentes **caractérisé en ce que** la clé de scellement et/ou le code d'identification sont calculés entre outre à partir d'informations relatives à l'opérateur de la transformation.

8. Procédé pour assurer la traçabilité selon l'une quelconque des revendication précédentes **caractérisé en ce que** la clé de scellement et/ou le code d'identification sont apposés sous forme d'un marquage matriciel.

9. Application du procédé conforme à l'une au moins des revendications précédentes pour la traçabilité de la chaîne de transformation de la viande.

10. Application du procédé conforme à l'une au moins des revendications précédentes pour la traçabilité du retraitement de déchets.

11. Application du procédé conforme à l'une au moins des revendications précédentes pour la traçabilité d'échantillons biologiques.

## Patentansprüche

1. Verfahren zur Sicherung der Rückverfolgbarkeit von aufeinanderfolgenden Elementen einer Verarbeitungsreihe, die bei jeder Übertragung einen Schritt umfasst, der darin besteht, ein Identifikationsdokument des Elementes zu erstellen, das aus der genannten Verarbeitung und eventuell aus vorherigen Verarbeitungen hervorgeht. Das Verfahren ist **dadurch gekennzeichnet, dass** man jedem Element einen Versiegelungsschlüssel und einen Identifikationscode zuordnet, die entsprechend auf der Grundlage des Versiegelungsschlüssels und des Identifikationscodes berechnet werden, die einerseits dem Element vor seiner Verarbeitung zugeordnet werden und andererseits dem Identifikationsdokument dieses Elementes zugeordnet werden.

2. Verfahren zur Sicherung der Rückverfolgbarkeit gemäß dem Patentanspruch 1, das **dadurch gekennzeichnet ist, dass** die aufeinanderfolgenden Schlüssel nicht umkehrbar, von unten nach oben berechnet werden.

3. Verfahren zur Sicherung der Rückverfolgbarkeit gemäß dem Patentanspruch 1 oder 2, das **dadurch gekennzeichnet ist, dass** die aufeinanderfolgenden Identifikationscodes zur Erleichterung der Informationssammlung von unten nach oben erstellt wurden und um vom Anfang bis zum Ende der Arbeiten ein Minimum an Details über die Herkunft des Produktes zu liefern.

4. Verfahren zur Sicherung der Rückverfolgbarkeit gemäß einem der vorherigen Patentansprüche, der beliebig gewählt werden kann und **dadurch gekennzeichnet ist, dass** die Schlüssel und die Identifikationscodes für eine graphische Darstellung geeignet sind.

5. Verfahren zur Sicherung der Rückverfolgbarkeit gemäß einem der vorherigen Patentansprüche, der beliebig gewählt werden kann und **dadurch gekennzeichnet ist, dass** der Versiegelungsschlüssel und/oder der Identifikationscode unter anderem auf der Grundlage von Informationen berechnet werden, die sich auf den Verarbeitungsort beziehen.

6. Verfahren zur Sicherung der Rückverfolgbarkeit gemäß einem der vorherigen Patentansprüche, der beliebig gewählt werden kann und **dadurch gekennzeichnet ist, dass** der Versiegelungsschlüssel und/oder der Identifikationscode unter anderem auf der Grundlage von Informationen berechnet werden, die sich auf das Verarbeitungsdatum beziehen.

7. Verfahren zur Sicherung der Rückverfolgbarkeit gemäß einem der vorherigen Patentansprüche, der beliebig gewählt werden kann und **dadurch gekennzeichnet ist, dass** der Versiegelungsschlüssel und/oder der Identifikationscode unter anderem auf der Grundlage von Informationen berechnet werden, die sich auf denjenigen beziehen, der die Verarbeitung durchführt.

8. Verfahren zur Sicherung der Rückverfolgbarkeit gemäß einem der vorherigen Patentansprüche, der beliebig gewählt werden kann und **dadurch gekennzeichnet ist, dass** der Versiegelungsschlüssel und/oder der Identifikationscode in Form einer Matrixkennzeichnung aufgebracht sind.

9. Anwendung des Verfahrens, das zumindest einem der vorherigen Patentansprüche in Bezug auf die Rückverfolgbarkeit der Fleischverarbeitungskette entspricht.

10. Anwendung des Verfahrens, das zumindest einem der vorherigen Patentansprüche in Bezug auf die Rückverfolgbarkeit der Abproduktnutzung entspricht.

11. Anwendung des Verfahrens, das zumindest einem der vorherigen Patentansprüche in Bezug auf die Rückverfolgbarkeit der biologischen Proben entspricht.

## Claims

1. Method for assuring the traceability of successive elements in a processing series, comprising at each transmission a step consisting of producing an identification document for the element resulting from said processing and optionally from previous processing, **characterized in that** with each element a sealing key and an identification code are associated, calculated using the respective sealing key and identification code associated with the element before its processing and using the identification document of said element.

2. Method for assuring traceability according to claim 1, **characterized in that** the successive keys are calculated in irreversible manner, from downstream to upstream.

3. Method for assuring traceability according to claim 1 or 2, **characterized in that** the successive identification codes are established to facilitate quest for information from downstream to upstream and to carry minimum details on product origin from start to end of operations.

4. Method for assuring traceability according to any of the preceding claims, **characterized in that** the keys and identification codes are able to be graphically reproduced.

5. Method for assuring traceability according to any of the preceding claims, **characterized in that** the sealing key and/or identification code are calculated, inter alia, using information on the place of processing.

6. Method for assuring traceability according to any of the preceding claims, **characterized in that** the sealing key and/or identification code are calculated, inter alia, using information on the date of processing.

7. Method for assuring traceability according to any of the preceding claims, **characterized in that** the sealing key and/or identification code are calculated, inter alia, using information on the processing operator.

8. Method for assuring traceability according to any of the preceding claims, **characterized in that** the sealing key and/or identification code are affixed in the form of matrix marking.

9. Application of the method according to at least one of the preceding claims for traceability in the meat processing chain.

10. Application of the method according to at least one of the preceding claims for traceability in waste treatment.

11. Application of the method according to at least one of the preceding claims for the traceability of biological samples.
